# EUROPÄISCHE PATENTSCHRIFT

(11) **EP 2 791 070 B1**
(45) Veröffentlichungstag und Bekanntmachung des Hinweises auf die Patenterteilung: **19.07.2017**
(21) Anmeldenummer: 12808313.6
(22) Anmeldetag: 12.12.2012
(51) Int. Cl.: C03B 37/014

(54) **VERFAHREN ZUR HERSTELLUNG VON SYNTHETISCHEM QUARZGLAS SOWIE QUARZGLAS FÜR DEN EINSATZ ALS MANTELMATERIAL EINER OPTISCHEN FASER**
METHOD FOR PRODUCING SYNTHETIC QUARTZ GLASS, AND QUARTZ GLASS FOR USE AS A CLADDING MATERIAL FOR AN OPTICAL FIBRE
PROCÉDÉ DESTINÉ À FABRIQUER DU VERRE DE QUARTZ SYNTHÉTIQUE AINSI QUE VERRE DE QUARTZ POUR LA GAINE D'UNE FIBRE OPTIQUE

(30) Priorität: 15.12.2011 DE 102011121153
(43) Veröffentlichungstag der Anmeldung: 22.10.2014
(73) Patentinhaber: Heraeus Quarzglas GmbH & Co. KG, 63450 Hanau (DE)
(72) Erfinder: TROMMER, Martin, 06749 Bitterfeld (DE); ZWARG, Steffen, 06766 Wolfen (DE); SATTMANN, Ralph, 63739 Aschaffenburg (DE); KUEHN, Bodo, 63571 Gelnhausen (DE)
(74) Vertreter: Staudt, Armin Walter
(86) Internationale Anmeldenummer: PCT/EP2012/075197
(87) Internationale Veröffentlichungsnummer: WO 2013/087678

(56) Entgegenhaltungen:
- EP-A1- 0 878 451
- EP-A1- 1 179 514
- EP-A1- 1 580 170
- US-A1- 2002 157 420

## Beschreibung

Die vorliegende Erfindung betrifft ein Verfahren zur Herstellung von synthetischem Quarzglas, umfassend die Verfahrensschritte:
(a) Umsetzen eines eine kohlenstoffhaltige Siliziumverbindung enthaltenden Einsatzmaterials mit Sauerstoff in einer Reaktionszone zu SiO₂-Partikeln,
(b) Abscheiden der SiO₂-Partikel auf einer Ablagerungsfläche unter Bildung eines Kohlenstoff und Hydroxylgruppen enthaltenden, porösen SiO₂-Sootkörpers,
(c) Trocknen des porösen SiO₂-Sootkörpers, durch Erhitzen in einer halogenhaltigen Atmosphäre, und
(d) Verglasen zu dem synthetischen Quarzglas durch Erhitzen des Sootkörpers auf eine Verglasungstemperatur.

Weiterhin betrifft die Erfindung ein synthetisches Quarzglas als Mantelmaterial einer optischen Faser.

Zur Herstellung von synthetischem Quarzglas werden aus einem siliziumhaltigen Einsatzmaterial in einem CVD-Verfahren durch Hydrolyse oder Oxidation SiO₂-Partikel erzeugt und diese auf einem Träger abgeschieden. Als Beispiele seien das so genannte OVD-Verfahren (outside vapour phase deposition), das VAD-Verfahren (vapour phase axial deposition) oder das POD-Verfahren (plasma outside deposition) genannt.

Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim so genannten "Sootverfahren" die Temperatur beim Abscheiden der SiO₂-Partikel so niedrig, dass eine poröse SiO₂-Sootschicht erhalten wird, die in einem separaten Verfahrensschritt zu transparentem Quarzglas gesintert wird. Sowohl das Direktverglasen als auch das Sootverfahren führen zu einem dichten, transparenten, hochreinen, synthetischen Quarzglas.

In der Vergangenheit hat sich als siliziumhaltiges Einsatzmaterial Siliziumtetrachlorid (SiCl₄) bewährt. Bei der Umsetzung von SiCl₄ und anderen chlorhaltigen Einsatzmaterialien entsteht Salzsäure, die hohe Kosten bei der Abgaswäsche und Entsorgung verursacht. Daher werden zunehmend chlorfreie Organosiliziumverbindungen als Einsatzmaterial für die Quarzglasherstellung eingesetzt. Als Beispiele seien Monosilane, Alkoxysilane, Siloxane und Silazane genannt. Eine besonders interessante Gruppe chlorfreier Organosiliziumverbindungen bilden die Polyalkylsiloxane (auch kurz als "Siloxane" bezeichnet). Polyalkylcyclosiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Insbesondere wegen der großtechnischen Verfügbarkeit in hoher Reinheit wird Octamethylcyclotetrasiloxan (OMCTS) eingesetzt.

### Stand der Technik

Aus der WO 90/10596 A1 ist ein Verfahren der eingangs genannten Gattung zur Herstellung von synthetischem Quarzglas unter Einsatz chlorfreier Polyalkylcyclosiloxane als Einsatzmaterial bekannt. Zur Herstellung eines SiO₂-Sootkörpers werden der zentralen Düsenöffnung eines mehrdüsigen Abscheidebrenners OMCTS-Dampf mit einer Rate von 0,086 m³/h zusammen mit Stickstoff als Trägergas mit einer Rate von 0,03 m³/h zugeführt. Der ersten Ringdüse wird Wasserstoff und der zweiten Ringdüse Sauerstoff zugeführt. Daraus werden in der Brennerflamme Siliziumdioxid-Partikel gebildet, die auf der Zylindermantelfläche eines um seine Längsachse rotierenden, zylindrischen Grafit-Dorns mit einem Durchmesser von 100 mm schichtweise abgeschieden werden. Die Temperatur in der Abscheidezone wird dabei im Bereich von 1000-1300°C gehalten, so dass nach einer Abscheidedauer von 8 Stunden ein poröser SiO₂-Sootkörper mit einem Gewicht von etwa 5 kg und einer mittlere Dichte von 0,4 g/cm³ erhalten wird. Der Sootkörper wird unter Vakuum getrocknet und gleichzeitig zu einem transparenten Rohr aus hochreinem, chloridfreiem, synthetischem Quarzglas mit einem Hydroxylgruppengehalt (OH Gehalt) von weniger als 1 ppm gesintert. Das Quarzglasrohr ist als Mantelmaterial für eine optische Faser geeignet.

Aus EP 1 580 170 A1 ist ein synthetisches, hochviskoses Quarzglas für Hochtemperaturanwendungen in der Halbleiterherstellung bekannt. Zur Herstellung wird ein Einsatzmaterial mit kohlenstoffhaltigen Siliziumverbingen eingesetzt. Das so erhaltene Quarzglas weist gemäß Experimental Example 1-1 einen Kohlenstoffgehalt von 10 ppm, einen Extinktionskoeffizienten von 0,1 cm⁻¹ und einen Chlorgehalt von 2300 ppm, sowie einen Hydroxylgruppengehalt von kleiner 1 ppm auf. In weiteren Beispielen ist synthetisches Quarzglas mit Kohlenstoffgehalten von bis zu 2800 ppm offenbart. Bei einem Kohlenstoffgehalt von 1500 ppm ist das Glas schwarz gefärbt.

Ein Verfahren zur Herstellung von synthetischem Quarzglas für den Einsatz als Kernmaterial einer optischen Faser ist weiterhin in EP 1 179 514 A1 offenbart. Als Ausgangssubstanzen zur Herstellung des Kernglases werden Silanverbindungen verwendet, die Kohlenstoff enthalten. Gemäß Example 1 wird als Zwischenprodukt ein SiO₂-Sootkörper erzeugt, der bei einer Temperatur von etwa 1600°C unter Helium-Atmosphäre gesintert wird. Der Anteil des im gesinterten Quarzglas verbleibenden Kohlenstoffs liegt im Bereich zwischen 40 und 100 ppm und kann durch entsprechende Steuerung der Sauerstoffzugabe beim Abscheiden eingestellt werden. Ein separater Trocknungsschritt wird in EP 1 179 514 A1 nicht erwähnt.

Ein Verfahren zur Herstellung von synthetischem Quarzglas ist weiterhin in US2002/0157420 offenbart. OMCTS wird als Ausgangssubstanz zum Abscheiden eines Sootkörpers verwendet. Danach wird der Sootkörper in einer chlorhaltigen Atmosphäre getrocknet und unter Vakuum verglast. Das so erhaltene Quarzglas weist einen Hydroxylgruppengehalt von kleiner 1 ppm auf.

### Technische Aufgabenstellung

Die Herstellung von synthetischem Quarzglas über das Sootverfahren erfordert eine Vielzahl von Prozessschritten, deren Anzahl und Dauer einen wesentlichen Kostenfaktor darstellt.

Bei der Hydrolyse oder Oxidation von organischem, also kohlenstoffhaltigem Einsatzmaterial zur Erzeugung von SiO₂ besteht grundsätzlich die Möglichkeit, dass sich Kohlenstoff im Sootkörper bildet. In der WO 90/10596 A1 wird in dem Zusammenhang berichtet, dass Kohlenstoff unerwünscht ist und bei unvollständiger Verbrennung des Einsatzmaterials entstehen kann. Um dies zu vermeiden, wird vorgeschlagen, ein Einsatzmaterial mit möglichst geringem atomarem Kohlenstoffanteil einzusetzen und den Abscheideprozess in Gegenwart eines Sauerstoffüberschusses durchzuführen. Ein Sauerstoffüberschuss beim Abscheideprozess führt jedoch im Vergleich zu stöchiometrischem Sauerstoff zu einer geringeren Abscheiderate.

Ein besonders zeit- und kostenintensiver Prozessschritt ist die Dehydratationsbehandlung des Sootkörpers zur Beseitigung von Hydroxylgruppen (OH-Gruppen). Diese werden herstellungsbedingt in die Sootkörpermatrix eingebracht und haben Einfluss auf die Transmissionseigenschaften, insbesondere in dem für die optische Übertragung in Glasfasern wichtigen infraroten Wellenlängenbereich. Um den Hydroxylgruppengehalt zu minimieren, sind Dehydratationsbehandlungen bei hoher Temperatur unter Einwirkung von Vakuum oder unter einer reaktiven Behandlungsatmosphäre allgemein bekannt.

Eine reaktive Behandlung erfordert im Allgemeinen kürzere Behandlungsdauern und kann zu geringeren Restgehalten an Hydroxylgruppen führen als die thermisch unterstütze Vakuumbehandlung. Geeignete reaktive Komponenten sind Halogene, insbesondere Chlor. Dabei wird der Sootkörper einer chlorhaltigen Atmosphäre bei hoher Temperatur um 800°C ausgesetzt, so dass es zu einer Substitution von OH-Gruppen durch Chlor und zu einem Einbau von Chlor in das Glasnetzwerk kommt. Demgegenüber erfordert eine rein physikalische - und nicht chemisch unterstützte - Absenkung des Hydroxylgruppengehalts auf Werte unterhalb von 50 Gew.-ppm lange Behandlungsdauern bei hohen Temperaturen.

Der Einsatz von Chlor macht jedoch den eingangs erwähnten Vorteil chlorfreier Ausgangsstoffe in Bezug auf das Anfallen von Salzsäure und die geringeren Kosten für Abgaswäsche und Entsorgung teilweise wieder zunichte. Daher besteht grundsätzlich das Bedürfnis, reaktive Behandlungen des Sootkörpers unter chlorhaltiger Atmosphäre zu vermeiden oder den Chlor-Einsatz zu minimieren.

Der Erfindung liegt die Aufgabe zugrunde, ein Verfahren anzugeben, das eine kostengünstige Herstellung von Quarzglas durch Pyrolyse oder Hydrolyse einer kohlenstoffhaltigen Siliziumverbindung unter Einsatz eines kohlenstoffhaltigen Einsatzmaterials ermöglicht.

Weiterhin liegt der Erfindung die Aufgabe zugrunde, ein synthetisches Quarzglas für den Einsatz als kostengünstiges Mantelmaterial für optische Fasern für die Telekommunikationstechnik bereit zustellen.

### Allgemeine Beschreibung der Erfindung

Hinsichtlich des Verfahrens wird diese Aufgabe ausgehend von einem Verfahren der eingangs genannten Gattung erfindungsgemäß dadurch gelöst, dass ein Sootkörper mit einem Kohlenstoffgehalt im Bereich von 1 Gew.-ppm bis 50 Gew.-ppm erzeugt wird. Das erfindungsgemäße Verfahren erfordert als Zwischenstufe einen porösen SiO₂-Sootkörper, der mit Kohlenstoff in einem engen Konzentrationsbereich dotiert ist (im Folgenden auch als "Kohlenstoff-Dotierung" bezeichnet). Ein Kohlenstoffgehalt im synthetischen Quarzglas oder im Sootkörper wird üblicherweise als zu vermeidender Mangel angesehen. Es hat sich aber überraschend gezeigt, dass eine Kohlenstoff-Dotierung im Sootkörper im Umfang von 1 bis 50 Gew.-ppm sowohl Effektivitätsvorteile beim Abscheideprozess als auch beim Trocknungsprozess mit sich bringt, wobei das Trocknen gemäß Verfahrensschritt (c) durch Erhitzen des porösen Sootkörpers in einer halogenhaltigen Atmosphäre erfolgt:
(1) Infolge des Aufheizens beim Trocknungsprozess reagiert der in Spuren vorhandene Kohlenstoff mit den im Sootkörper enthaltenden H₂O-Molekülen und OH-Gruppen zu CO und H₂. Die Reaktion lässt sich durch folgende Reaktionsgleichung beschreiben:

   H₂O + C → CO + H₂ (1)

   2OH + C →.. CO₂ + H₂ (2)

   OH + CO → CO₂ + ½H₂ (3)

   Kohlenstoff liegt atomar oder in Form von Kohlenwasserstoffverbindungen, insbesondere Methylgruppen oder anderen Fragmenten des Einsatzmaterials vor. Er ist in der Sootkörpermatrix fein verteilt und wirkt infolge obiger Reaktionen als reaktives Trocknungsmittel. Er trägt zur Trocknung des Sootkörpers zumindest insoweit bei, dass der Trocknungsprozess verstärkt und beschleunigt wird. Für Anwendungen des Quarzglases mit hohen Anforderungen an Hydroxylgruppenfreiheit, wie etwa für den Einsatz als Fasermaterial in der Telekommunikationstechnik, kann der Anteil anderer reaktiver Trocknungsreagenzien, wie Chlor, reduziert, oder die Trocknungsdauer kann verkürzt werden. Für Anwendungen mit geringeren Anforderungen an Hydroxylgruppenfreiheit, wie etwa für Linsen in der Mikrolithographie, kann auf andere reaktive Trocknungsreagenzien auch vollständig verzichtet werden.
(2) Die einzustellende Kohlenstoff-Dotierung des Sootkörpers kann durch eine unvollständige Verbrennung der Siliziumverbindung im Abscheideprozess erreicht werden. Dies erlaubt wiederum eine Führung des Abscheideprozesses mit brennstoffreicher Flamme. Darunter wird hier eine Flamme verstanden, in der der Anteil von Sauerstoff so gering und der Anteil zu verbrennender Siliziumverbindung so hoch ist, dass bei den gegebenen Reaktionsbedingungen eine vollständige Verbrennung ausgeschlossen ist. Eine brennstoffreiche Flamme ermöglicht besonders hohe Abscheideraten und ergibt damit einen Kostenvorteil im Vergleich zum Standard-Abscheideprozess mit neutraler oder "magerer, sauerstoffreicher Flamme".

Die Abwandlung des üblichen Abscheideprozesses gemäß der Erfindung führt somit über eine Zwischenstufe in Form eines Sootkörpers mit geringen Anforderungen an die Reinheit und geht mit Effektivitätsgewinnen sowohl beim Abscheideprozess als auch beim anschließenden Trocknungsprozess einher. Der Umfang dieser Wirkungen hängt von der Kohlenstoff-Konzentration im Sootkörper ab. Kohlenstoff-Dotierungen von weniger als 1 Gew.-ppm bewirken wenig. Bei Konzentrationen von mehr als 50 Gew.-ppm können sich im weiteren Verarbeitungsprozess gasförmige Reaktionsprodukte bilden und es macht sich die reduzierende Wirkung des Kohlenstoffs insoweit bemerkbar, als dass zunehmend Sauerstoffdefizitzentren erzeugt werden, die sich auf die Qualität des Quarzglases ungünstig auswirken können. Dieser Effekt kann zwar durch eine oxidierend wirkende Atmosphäre beim Verglasen vermindert oder beseitigt werden, was aber mit technologischen Oxidationsproblemen einhergehen kann. Andererseits sind Sauerstoffdefizitzentren im Quarzglas je nach dessen Einsatzzweck tolerierbar. Für Quarzglas zum Einsatz als Fasermaterial in der Telekommunikationstechnik sind beispielsweise die Anforderungen an Defektfreiheit vergleichsweise gering, für Quarzglas zum Einsatz in der Mikrolithographie vergleichsweise hoch. Im Hinblick hierauf liegt der Kohlenstoffgehalt im Sootkörper vorzugsweise im Bereich von 2 Gew.-ppm bis 25 Gew.-ppm.

Maßnahmen zur Einstellung der gewünschten Kohlenstoff-Dotierung durch eine brennstoffreiche Flamme sind anhand weniger Versuche auf ihre Eignung hin überprüfbar. Im einfachsten Fall wird der Kohlenstoffgehalt erzeugt, indem beim Umsetzen des Einsatzmaterials gemäß Verfahrensschritt (a) ein überstöchiometrischer Anteil der kohlenstoffhaltigen Siliziumverbindung in der Reaktionszone bereitgestellt wird.

Hierbei wird - im Gegensatz zum Rat der eingangs genannten WO 90/10596 A1 - der Reaktionszone nicht Sauerstoff, sondern die zu verbrennende Siliziumverbindung im Überschuss zugeführt. "Im Überschuss" oder "mit überstöchiometrischem Anteil" bedeutet hier, dass die Menge oxidierender Komponenten in der Reaktionszone nicht genügt, um das Einsatzmaterial vollständig zu verbrennen. Im Vergleich zu einer neutralen oder "mageren", sauerstoffreichen Flamme, ergibt sich dadurch eine höhere Abscheiderate, wobei gleichzeitig das vollständige Verbrennen der Siliziumverbindung bereits aus stöchiometrischen Gründen in der Reaktionszone ausgeschlossen ist.

Dazu alternativ oder ergänzend hat es sich im Hinblick auf eine erhöhte Abscheiderate auch als günstig erwiesen, wenn der Kohlenstoffgehalt erzeugt wird, indem die Verweildauer der kohlenstoffhaltigen Siliziumverbindung in der Reaktionszone kürzer eingestellt wird als zum vollständigen Umsetzen des Einsatzmaterials erforderlich.

Ein vollständiges Verbrennen in der Reaktionszone kann beispielsweise verhindert werden, wenn das Einsatzmaterial in der Reaktionszone vor dem Sauerstoff abgeschirmt wird, wie etwa durch Vorsehen eines Trenngasstroms aus Inertgas zwischen dem Strom aus Einsatzmaterial und einem Sauerstoffstrom. Vorzugsweise ist aber vorgesehen, dass die Verweildauer durch Einstellen einer zu kurzen Reaktionszone und/oder durch Erzeugen einer zu hohen Strömungsgeschwindigkeit des Einsatzmaterials in der Reaktionszone erzeugt wird.

Die Verweildauer des Einsatzmaterials in der Reaktionszone wird dabei durch einen beschleunigten Durchsatz und/oder durch eine absolute Verkürzung der Reaktionszone erreicht. Beide Maßnahmen sind geeignet, die Verweildauer des Einsatzmaterials in der Reaktionszone so einzustellen, dass sie kürzer ist als die zum vollständigen Umsetzen erforderliche Verweildauer. Eine in diesem Sinne "zu kurze Reaktionszone" kann beispielsweise dadurch erhalten werden, dass beim Abscheideprozess ein Abstand zwischen einem Abscheidebrenner und der Ablagerungsfläche eingestellt wird, der kürzer ist als zur vollständigen Umsetzung erforderlich.

Es hat sich bewährt, wenn ein Sootkörper mit einer mittleren relativen Dichte - bezogen auf die Dichte von Quarzglas (2,21 g/cm³) - im Bereich zwischen 20 % und 35 % erzeugt wird.

Sootkörper mit einer mittleren relativen Dichte von weniger als 20 % sind mechanisch instabil und neigen zu Verformungen und Blasenbildung beim Verglasen. Sootkörper mit einer mittleren relativen Dichte von mehr als 35 % erschweren einen schnellen, effektiven Trocknungsprozess.

Das Trocknen gemäß Verfahrensschritt (c) erfolgt vorzugsweise derart, dass im synthetischen Quarzglas ein Hydroxylgruppengehalt von weniger als 1 Gew.-ppm eingestellt wird.

Wie weiter oben bereits erläutert, bewirkt die Kohlenstoff-Dotierung aufgrund ihrer reduzierenden Wirkung ein Trocknen des Sootkörpers oder trägt zumindest zu eine schnelleren und effektiveren Trocknung bei. Bei sehr hohen Anforderungen an die Hydroxylgruppenfreiheit, wie etwa zum Einsatz des Quarzglases als Fasermaterial in der Telekommunikationstechnik, erweist sich die Trocknungswirkung geringer Kohlenstoff-Dotierungen bis 50 Gew.-ppm jedoch als unzureichend, so dass ergänzend der Einsatz eines halogenhaltigen Trocknungsreagenzes vorgeschlagen wird, insbesondere von Chlor. Dadurch kann es zwar zu einer Beladung des Sootkörpers mit dem entsprechenden Halogen kommen, was aber für den Einsatz des Quarzglases als Fasermaterial in der Telekommunikationstechnik tolerierbar ist. Wegen der ergänzenden Trocknungswirkung der Kohlenstoff-Dotierung ergibt sich in jedem Fall eine schnellere Trocknung (bei gleichem Hydroxylgruppengehalt) oder ein niedrigerer Hydroxylgruppengehalt (bei gleicher Trocknungsdauer) und Verbrauch von Halogen und dessen Eintrag in den Sootkörper ist geringer als ohne die Kohlenstoff-Dotierung.

Infolge der ergänzenden reaktiven Trocknung kommt es zu einer Beladung des Sootkörpers mit dem entsprechenden Halogen, was ohne besondere Vorkehrungen auch nach dem Verglasungsprozess zum großen Teil im Quarzglas verbleibt. Im Fall von Chlor hat es sich bewährt, wenn der Trocknungsprozess so geführt wird, dass sich im synthetischen Quarzglas nach dem Verglasen ein Chlorgehalt im Bereich von 800 bis 2500 Gew.-ppm einstellt.

Vorzugsweise wird OMCTS als Einsatzmaterial eingesetzt. OMCTS ist eine kohlenstoffhaltige organische Siliziumverbindung, die in großtechnischem Maßstab in hoher Reinheit verfügbar ist und die sich durch einen hohen Anteil an Silizium pro Molekül auszeichnet.

Hinsichtlich des synthetischen Quarzglases als Mantelmaterial einer optischen Faser wird die oben angegebene Aufgabe erfindungsgemäß durch ein Quarzglas gelöst, das aufweist: einen Gehalt an Sauerstoffdefektzentren, ausgedrückt durch einen Extinktionskoeffizienten k248 bei einer Wellenlänge von 248 nm mit: 0,0035 < k248 < 0,1 cm⁻¹, einen Chlorgehalt im Bereich von 800 bis 2500 Gew.-ppm, einen Hydroxylgruppengehalt von weniger als 0,5 Gew.-ppm und ein Verhältnis [Cl] / k248, für das gilt: 100.000 < [Cl] / k248 < 550.000.

Ein derartiges synthetisches Quarzglas ist kostengünstig mittels des erfindungsgemäßen Verfahrens über ein Zwischenprodukt in Form eines Sootkörpers mit einem Kohlenstoffgehalt im Bereich von 1 bis 50 Gew.-ppm erhältlich, sofern bei der Trocknung des Sootkörpers die Trocknungswirkung durch die Kohlenstoff-Dotierung durch den Einsatz eines chlorhaltigen Trocknungsgases ergänzt wird.

Die Kohlenstoff-Dotierung des Sootkörpers entfaltet bei Temperaturerhöhung eine reduzierende Wirkung, die sich in der Bildung von Sauerstoff-Defektzentren (im Folgenden auch als "ODC-Zentren" (Oxygen Deficient Center) bezeichnet) äußert. ODC-Zentren zeigen in Quarzglas ein Absorptionsmaximum bei einer Wellenlänge um 248 nm. Die Absorption bei dieser Wellenlänge ist daher als Maß für die Menge an ODC-Zentren im Quarzglas geeignet. Das erfindungsgemäße synthetische Quarzglas hat einen nennenswerten Extinktionskoeffizienten k248 bei dieser Wellenlänge im Bereich von 0,0035 bis 0,1 cm⁻¹ Dieser Nachteil überwiegt nicht die Kostenvorteile, die sich durch die effektive Abscheidung und die effektivere Trocknung ergeben; für Anwendungen als Mantelmaterial für optische Fasern ist ein Gehalt an ODC-Zentren in diesem Bereich unproblematisch.

Weiterhin zeichnet sich das erfindungsgemäße Quarzglas durch einen extrem geringen Hydroxylgruppengehalt von weniger als 0,5 Gew.-ppm aus, vorzugsweise weniger als 0,2 Gew.-ppm. Damit einhergehend ergibt sich ein gewisser Gehalt an Chlor [Cl] im Bereich von 800 bis 2500 Gew.-ppm.

Das erfindungsgemäße Quarzglas wird durch einen effektiven Trocknungsprozess erhalten, der einerseits von der Kohlenstoff-Dotierung und andererseits von der Intensität der Chlorbehandlung bestimmt wird. Beide Maßnahmen haben gewisse Nachteile, nämlich die ODC-Bildung einerseits (die im Übrigen auch allein durch die Dehydratationsbehandlung des Sootkörpers unter chlorhaltiger Atmosphäre generiert wird) und die Chlorbeladung andererseits. Diese Nachteile werden aber durch die Kostenersparnis beim Trocknungsprozess kompensiert. Ein Optimum ist im Wesentlichen unabhängig vom Trocknungsgrad und gekennzeichnet durch ein Verhältnis [Cl] / k248, für das gilt: 100.000 < [Cl] / k248 < 550.000.

Bei Verhältniszahlen unterhalb von 100.000 ist die Anzahl der ODC-Zentren, und bei Verhältniszahlen oberhalb von 550.000 ist der Chlorgehalt unverhältnismäßig hoch.

### Ausführungsbeispiel

Die Erfindung wird im Folgenden anhand von Ausführungsbeispielen und einer Zeichnung näher erläutert. Es zeigt
- **Figur 1**: eine Vorrichtung zur Durchführung des erfindungsgemäßen Verfahrens zur Herstellung eines SiO₂-Sootkörpers in schematischer Darstellung, und
- **Figur 2**: ein Diagramm zur Abhängigkeit von k248 vom Trocknungsgrad bei verschiedenen Herstellungsmethoden,

### Standardmäßige Herstellung eines SiO₂-Sootkörpers

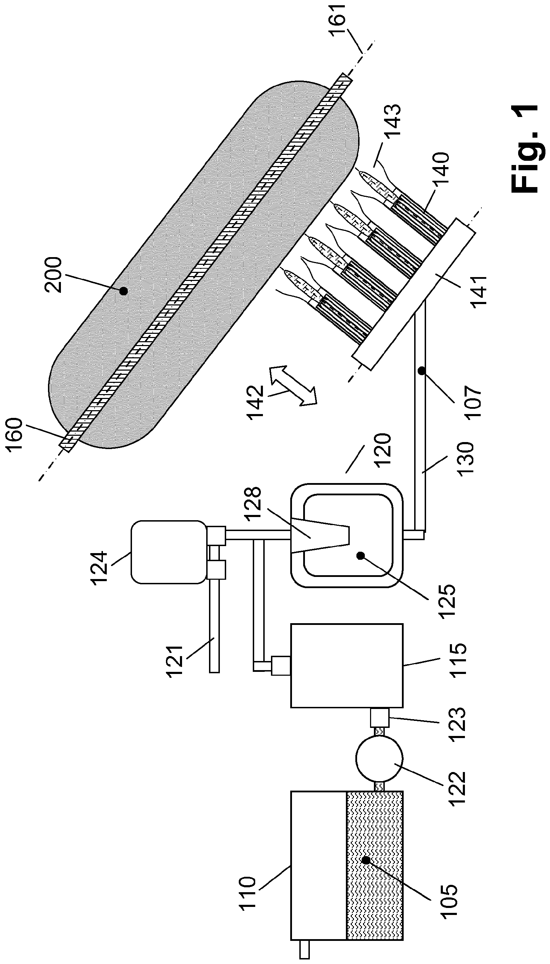

Mittels der in **Figur 1** schematisch dargestellten Vorrichtung wird ein SiO₂-Sootkörpers 200 hergestellt. Entlang eines Trägerrohres 160 aus Aluminiumoxid ist eine Vielzahl in einer Reihe angeordneter Flammhydrolysebrenner 140 angeordnet, die zur Soot-Abscheidung in einer gemeinsamen Brennerreihe entlang des rotierenden Trägerrohres 160 reversierend hin- und herbewegt werden, wobei jede der Brennerflammen 143 nur eine Teillänge des Trägerrohres 160 überstreicht. Die Flammhydrolysebrenner 140 sind auf einem gemeinsamen Brennerblock 141 montiert, der parallel zur Längsachse 161 des Trägerrohrs 160 zwischen zwei, in Bezug auf die Längsachse 161 ortsfesten Wendepunkten hin- und herbewegt wird und der senkrecht dazu verschiebbar ist, wie dies die Richtungspfeile 142 andeuten. Die Brenner 140 bestehen aus Quarzglas; ihr Mittenabstand zueinander beträgt 15 cm.

Den Flammhydrolysebrennern 140 werden jeweils als Brennergase Sauerstoff und Wasserstoff zugeführt und in den jeweils zugeordneten Brennerflammen 143 zusammen mit einem Einsatzmaterial für die Bildung von SiO₂-Partikeln verbrannt. Der SiO₂-Einsatzdampf 107 wird aus flüssigem OMCTS 105 einer Reinheit von mehr als 99 Gew.-ppm erzeugt. Zu diesem Zweck wird das flüssige OMCTS 105 verdampft und der Reaktionszone in gasförmiger Form zugeführt und darin durch Oxidation und/oder Hydrolyse und/oder Pyrolyse zu SiO₂-Partikeln zersetzt.

Die SiO₂-Partikel werden auf der Zylindermantelfläche des um seine Längsachse 161 rotierenden Trägerrohrs 160 abgeschieden, so dass schichtweise der Sootkörper 200 mit einem Außendurchmesser von 350 mm aufgebaut wird. Während des Abscheideprozesses stellt sich auf der Sootkörperoberfläche eine Temperatur von etwa 1200°C ein.

Die Herstellung des Einsatzdampfes 107 erfolgt durch Verdampfen des OMCTS-Einsatzmaterials 105 mittels eines Verdampfers120, dem vorgeschaltet sind: ein Vorratsbehälter 110 für das flüssige OMCTS, eine Flüssigkeitspumpe 122, ein Durchflussmessgerät 123 für Flüssigkeit, eine Vorheizeinrichtung 115, ein MFC (mass flow controller) 124 für die geregelte Zufuhr eines Stickstoff-Trägergasstroms, der über die Leitung 121 zugeführt wird. Weiterhin ist eine beheizbare Verdampfungskammer 125 mit einem Flüssigkeits-Zerstäuber 128 vorgesehen.

Der Vorratsbehälter 110 wird auf Raumtemperatur gehalten, und die Flüssigkeit wird mittels der Pumpe 122 über das Durchflussmessgerät 123 und der Vorheizeinrichtung 115 in exakter Dosierung dem Flüssigkeits-Zerstäuber 128 zugeführt. Vor dem Zerstäuber 128 wird dem OMCTS-Strom - über den MFC 124 gesteuert - ein Stickstoff-Trägergasstrom, welcher auf 190 °C vorgewärmt ist, zugeführt.

Beim Flüssigkeits-Zerstäuber 128 - auch als Zerstäuberdüse bezeichnet - handelt es sich um einen Überschallzerstäuber. Diesem werden gleichzeitig ein Stickstoff-Trägergasstrom über den MFC 124 und die zu verdampfende Flüssigkeit mit einem Druck von etwa 5 bar zugeführt. Diese wird in feine Tröpfchen mit einem maximalen Durchmesser von 1 µm zerstäubt und dabei unmittelbar in die Verdampfungskammer 125 eingesprüht.

Die Verdampfungskammer 125 hat eine Innentemperatur von 160°C, so dass die feinen Flüssigkeitströpfchen direkt in der Gasphase unmittelbar verdampfen und der Dampfstrom einer ortsfesten Verteilerstation zugeführt und von dieser über wärmeisolierte flexible Medienzufuhrleitungen auf die einzelnen Abscheidebrenner 140 aufgeteilt wird. Sauerstoff und Wasserstoff werden den Abscheidebrennern 140 über separate Zufuhrleitungen zugeführt.

Die Mischung von Brenngasen und dem SiO₂-Einsatzdampf 107 erfolgt erst in der heißen Zone der Brennerflamme 143. Die Stöchiometrie zwischen verbrennbaren Gasen (Wasserstoff und etwaigen Kohlenwasserstoffen) und SiO₂-Einsatzdampf 107 einerseits sowie Sauerstoff andererseits sowie die jeweiligen Strömungsgeschwindigkeiten und die damit einhergehenden Verweildauern in der Brennerflamme 143 sind dabei so abgestimmt, dass sich eine vollständige Umsetzung des eingesetzten OMCTS in SiO₂-Partikel ergibt.

Nach Abschluss des Abscheideprozesses wird ein Rohr aus porösem SiO₂-Soot (Sootrohr) mit einem Außendurchmesser von 350 mm, einer Länge von 2500 mm und einer mittleren relativen Sootdichte von 25% (bezogen auf die Dichte von Quarzglas = 2,21 g/cm³) erhalten.

### Trocknen und Verglasen des Sootkörpers

Zum Entfernen der herstellungsbedingt eingebrachten Hydroxylgruppen wird das Sootrohr einer Dehydratationsbehandlung unterzogen. Dabei wird es in vertikaler Ausrichtung in einen Dehydratationsofen eingebracht und nach einem Vorheizen von 900 °C bei dieser Temperatur in einer chlorhaltigen Atmosphäre dehydratisiert. Die Behandlungsdauer beträgt 24 Stunden.

Danach wird der getrocknete Sootkörper in einem Sinterofen bei einer Temperatur von ca. 1550 °C unter Vakuum (10⁻² mbar) zu einem transparenten Quarzglasrohling verglast.

Der mittlere Hydroxylgruppengehalt des so erhaltenen Quarzglases liegt bei 0,2 Gew.-ppm, der mittlere Chlorgehalt bei etwa 1600 Gew.-ppm und der Kohlenstoffgehalt bei weniger als 1 Gew.-ppm. Das Quarzglas des Sootkörpers enthält relativ wenige Sauerstoff-Fehlstellen, die im Wesentlichen auf den Trocknungsprozess zurückgeführt werden können und die eine Absorption bei einer Wellenlänge von 248 nm bewirken, die sich als k248-Wert = 0,0022 cm⁻¹ zeigt.

### Zusammenfassung der Parameter des Standardprozesses

| Stöchiometrisches Verhältnis | |
|---|---|
| [Brenngase + OMCTS] / Sauerstoff V: | 1 |
| SiO₂-Aufbaurate (R_{SiO2}) in rel. Einheit: | 100 % |
| Aufbaudauer t_{Aufbau} in rel. Einheit: | 100% |
| Trocknungstemperatur T_{drying} in °C: | 900 |
| Trocknungsdauer t _{Trocknen} in h: | 24 |
| C-Gehalt [C] in Gew.-ppm: | <1 |
| Chlorgehalt [Cl₂] in Gew.-ppm: | 1.600 |
| Hydroxylgruppengehalt [OH] in Gew.-ppm: | < 0,2 |
| Extinktionskoeffizient k₂₄₈ in cm⁻¹: | 0,0019 |

In Tabelle 1 sind die entsprechenden Parameter sowie weitere Ausführungsbeispiele der Erfindung und deren Resultate zusammengefasst.

**Tabelle 1**

| **Nr.** | **V** | **Aufbaurate [%]** | **Trocknungsdauer [h]** | **C-Gehalt [ppm]** | **Chlorgehalt [ppm]** | **OH-Gehalt [ppm]** | **k₂₄₈**-**Wert [cm⁻¹]** | **Besonderheit** |
|---|---|---|---|---|---|---|---|---|
| **1** | 1 | 100 | 24 | < 1 | 1600 | 0,31 | 0,0019 | Standardparameter |
| **2** | 1,02 | 104 | 23 | 3 | 1425 | 0,1 | 0,0035 | Brennerflamme: O₂ unterstöchiometrisch |
| **3** | 1,05 | 107 | 21,5 | 7 | 1340 | 0,06 | 0,0048 | Brennerflamme: O₂ unterstöchiometrisch |
| **4** | 1,05 | 112 | 20 | 20 | 1260 | 0,02 | 0,007 | Brennerflamme: O₂ unterstöchiometrisch + verkürzter Abstand |

Bei den Versuchen 2 bis 4 wurde der Abscheideprozess zur Herstellung des Sootkörpers mit einem leicht überstöchiometrischen Gehalt an OMCTS durchgeführt, das heißt mit einer brennstoffreicheren Flamme. Dadurch ergab sich eine unvollständige Verbrennung des OMCTS, aber auch eine höhere Aufbaurate (angegeben als Relativwert zur Aufbaurate beim Standardprozess = 100%) und damit einhergehend eine kürzere Aufbauzeit. Bei der Abscheidung des Sootkörpers von Versuch 4 wurde zusätzlich der Abstand zwischen den Abscheidebrennern 140 und der Oberfläche des Sootkörpers 20 um 20 mm gegenüber dem Abstand beim Standardprozess verkürzt, so dass sich eine kürzere Verweilzeit von OMCTS in der jeweiligen Brennerflamme 143 ergab.

Die anhand der Versuche 2 bis 4 erzeugten Sootkörper enthielten die in Tabelle 1 genannten Mengen an Kohlenstoff. Der Kohlenstoff wirkt reduzierend und trägt beim anschließenden Trocknungsprozess in chlorhaltiger Atmosphäre zur Dehydratation des Sootkörpers bei. Dies führt zu einer kürzeren Trocknungszeit und einer geringeren Chlorbeladung als beim Standardprozess, wobei sich im Quarzglas ein Hydroxylgruppengehalt einstellt, der dem des Standardtrocknungsprozesses entspricht oder sogar niedriger liegt.

Allerdings ergibt sich bei dieser Verfahrensweise infolge der reduzierenden Wirkung des Kohlenstoffs auch ein gewisser Anteil an Sauerstoffdefektzentren, der sich als gegenüber dem Standard erhöhte Absorption bei einer Wellenlänge von 248 nm äußert.

Die beschriebenen Effekte der Kohlenstoffdotierung zeigen sich besonders deutlich beim Sootkörper von Versuch Nr. 4, bei dessen Herstellung eine brennstoffreiche Flamme eingesetzt wurde und die Verweilzeit in der Flamme gegenüber dem Standard verkürzt wurde. Infolge der erhöhten Zufuhrrate des Einsatzmaterials ergab sich dabei auch eine besonders hohe SiO₂-Aufbaurate. Die so erzeugte Kohlenstoff-Dotierung von etwa 20 Gew.-ppm erlaubt beim Trocknungsprozess bei gleichem Chlorgehalt der Atmosphäre eine Verkürzung der Trocknungsdauer und damit eine deutlich geringere Chlorbeladung des Sootkörpers.

Die erfindungsgemäße Modifikation der Sootkörperherstellung führt im Vergleich zum Standardverfahren zu einem schnelleren Abscheideprozess, zu einer kürzeren Behandlungsdauer und einem geringeren Gasverbrauch beim Trocknen des Sootkörpers. Insbesondere wegen der im Vergleich zum Standardprozess geringeren Prozessdauer ist das Quarzglas besonders kostengünstig herstellbar. Die durchgeführten Versuche mit Kohlenstoff-Dotierungen bis 20 Gew.-ppm zeigen, dass diese positiven Wirkungen mit der Kohlenstoff-Dotierung skalieren. Es ist davon auszugehen, dass dieser Effekt auch bei noch höheren Kohlenstoff-Dotierungen bis mindestens 50 Gew.-ppm und sogar darüber hinaus auftritt.

Das aus dem Sootkörper von Versuch 4 nach dem Verglasen erhaltene Quarzglas zeigt bei einer Wellenlänge von 248 nm eine Absorption von 0,007 cm⁻¹, einen Chlorgehalt von etwa 1260 Gew.-ppm und einen sehr geringen Hydroxylgruppengehalt von 0,02 Gew.-ppm. Das Verhältnis von Chlorgehalt und k248-Wert beträgt somit 180.000. Trotz seiner Absorption bei 248 nm, die auf Sauerstoffdefizitstellen im Quarzglas zurückzuführen ist, ist es als Mantelglas für eine optische Faser geeignet.

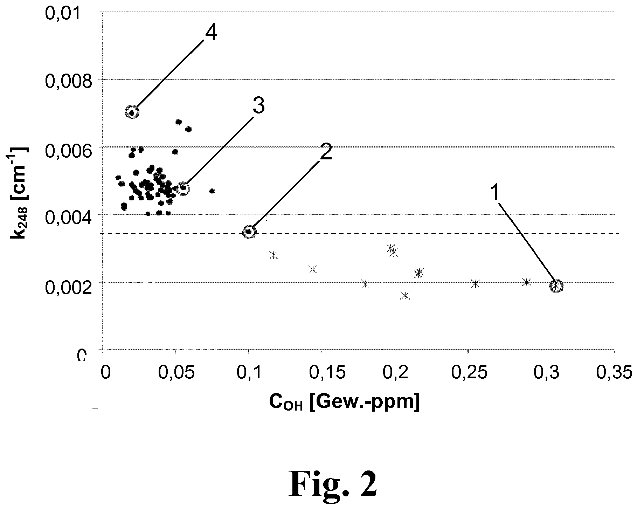

Im Diagramm von **Figur 2** sind auf der y-Achse die k₂₄₈-Werte in cm⁻¹ aufgetragen und auf der x-Achse der Hydroxylgruppengehalt C_{OH} in Gew.-ppm.

Die nach dem erfindungsgemäßen Verfahren hergestellten Messproben sind als Kreise dargestellt; die nach dem Standardverfahren hergestellten Messproben als Sterne. Die in Tabelle 1 aufgeführten Proben sind mit den Bezugsziffern 1, 2, 3 und 4 bezeichnet. Aus der Auftragung aller Messwerte ergibt sich eine bemerkenswerte Häufung von erfindungsgemäß hergestelltem und traditionell hergestelltem Quarzglas beiderseits eines bestimmten k248-Wertes von 0,0035. Die Proben unterhalb dieser Grenzlinie wurden alle anhand des Standardverfahrens hergestellt. Bei diesen Proben variiert der K248-Wert zwischen 0,002 und 0,0035 und es zeigt sich eine gewisse Abhängigkeit vom Hydroxylgruppengehalt des resultierenden Quarzglases.

Demgegenüber zeigen die nach dem erfindungsgemäßen Verfahren erzeugten Proben, die oberhalb der Grenzlinie von 0,0035 eingezeichnet sind keine ausgeprägte Abhängigkeit vom Hydroxylgruppengehalt.

## Patentansprüche

1. Verfahren zur Herstellung von synthetischem Quarzglas, umfassend die Verfahrensschritte:
(a) Umsetzen eines eine kohlenstoffhaltige Siliziumverbindung enthaltenden Einsatzmaterials mit Sauerstoff in einer Reaktionszone zu SiO₂-Partikeln,
(b) Abscheiden der SiO₂-Partikel auf einer Ablagerungsfläche unter Bildung eines Kohlenstoff und Hydroxylgruppen enthaltenden, porösen SiO₂-Sootkörpers,
(c) Trocknen des porösen SiO₂-Sootkörpers, durch Erhitzen des porösen Sootkörpers in einer halogenhaltigen Atmosphäre, und
(d) Verglasen zu dem synthetischen Quarzglas durch Erhitzen des Sootkörpers auf eine Verglasungstemperatur,
**dadurch gekennzeichnet, dass** ein Sootkörper mit einem Kohlenstoffgehalt im Bereich von 1 Gew.-ppm bis 50 Gew.-ppm erzeugt wird.

2. Verfahren nach Anspruch 1, **dadurch gekennzeichnet, dass** der Kohlenstoffgehalt erzeugt wird, indem beim Umsetzen des Einsatzmaterials gemäß Verfahrensschritt (a) ein überstöchiometrischer Anteil der kohlenstoffhaltigen Siliziumverbindung in der Reaktionszone bereitgestellt wird.

3. Verfahren nach Anspruch 1 oder 2, **dadurch gekennzeichnet, dass** der Kohlenstoffgehalt erzeugt wird, indem die Verweildauer der kohlenstoffhaltigen Siliziumverbindung in der Reaktionszone kürzer eingestellt wird als zum vollständigen Umsetzen des Einsatzmaterials erforderlich.

4. Verfahren nach Anspruch 3, **dadurch gekennzeichnet, dass** die Verweildauer durch Einstellen einer zu kurzen Reaktionszone und/oder durch Erzeugen einer zu hohen Strömungsgeschwindigkeit des Einsatzmaterials in der Reaktionszone erzeugt wird.

5. Verfahren nach einem der vorhergehenden Ansprüche, **dadurch gekennzeichnet, dass** ein Sootkörper mit einer mittleren relativen Dichte - bezogen auf die Dichte von Quarzglas (2,21 g/cm³) - im Bereich zwischen 20 % und 35 % erzeugt wird.

6. Verfahren nach einem der vorhergehenden Ansprüche, **dadurch gekennzeichnet, dass** im synthetischen Quarzglas ein Hydroxylgruppengehalt von weniger als 1 Gew.-ppm eingestellt wird.

7. Verfahren nach einem der vorhergehenden Ansprüche, **dadurch gekennzeichnet, dass** der Trocknungsprozess so geführt wird, dass sich im synthetischen Quarzglas nach dem Verglasen ein Chlorgehalt im Bereich von 800 bis 2500 Gew.-ppm einstellt.

8. Verfahren nach einem der vorhergehenden Ansprüche, **dadurch gekennzeichnet, dass** ein Sootkörper mit einem Kohlenstoffgehalt im Bereich von 2 Gew.-ppm bis 25 Gew.-ppm erzeugt wird.

9. Verfahren nach einem der vorhergehenden Ansprüche, **dadurch gekennzeichnet, dass** OMCTS als Einsatzmaterial eingesetzt wird.

10. Synthetisches Quarzglas als Mantelmaterial einer optischen Faser, **gekennzeichnet durch** einen Gehalt an Sauerstoffdefektzentren, ausgedrückt durch einen Extinktionskoeffizienten k248 bei einer Wellenlänge von 248 nm mit: 0,0035 < k248 < 0,1 cm⁻¹, einen Chlorgehalt [Cl] im Bereich von 800 bis 2500 Gew.-ppm, einen Hydroxylgruppengehalt von weniger als 0,5 Gew.-ppm und durch ein Verhältnis [Cl] / k248, für das gilt: 100.000 < [Cl] / k248 < 550.000.

## Claims

1. A method for producing synthetic quartz glass, comprising the steps of
(a) reacting a feedstock containing carbon-containing silicon compound with oxygen in a reaction zone so as to obtain SiO₂ particles,
(b) depositing the SiO₂ particles on a deposition surface to form a porous SiO₂ soot body containing carbon and hydroxyl groups,
(c) drying the porous SiO₂ soot body by heating the porous soot body in a halogen-containing atmosphere, and
(d) vitrifying the soot body by heating to a vitrification temperature so as to form the synthetic quartz glass,
**characterized in that** a soot body is produced with a carbon content in the range of 1 wt. ppm to 50 wt. ppm.

2. The method according to claim 1, **characterized in that** the carbon content is produced **in that** during reaction of the feedstock according to method step (a) an over-stoichiometric fraction of the carbon-containing silicon compound is provided in the reaction zone.

3. The method according to claim 1 or 2, **characterized in that** the carbon content is produced **in that** the residence time of the carbon-containing silicon compound in the reaction zone is set to be shorter than needed for the complete reaction of the feedstock.

4. The method according to claim 3, **characterized in that** the residence time is provided by setting an excessively short reaction zone and/or by producing an excessively high flow velocity of the feedstock in the reaction zone.

5. The method according to any one of the preceding claims, **characterized in that** a soot body is produced having a mean relative density, based on the density of quartz glass (2.21 g/cm³), in the range between 20% and 35%.

6. The method according to any one of the preceding claims, **characterized in that** a hydroxyl group content of less than 1 wt. ppm is set in the synthetic quartz glass.

7. The method according to any one of the preceding claims, **characterized in that** the drying process is carried out such that a chlorine content in the range of 800 to 2500 wt. ppm is set in the synthetic quartz glass after vitrification.

8. The method according to any one of the preceding claims, **characterized in that** a soot body is produced with a carbon content in the range of 2 wt. ppm to 25 wt. ppm.

9. The method according to any one of the preceding claims, **characterized in that** OMCTS is used as the feedstock.

10. A synthetic quartz glass as cladding material of an optical fiber, **characterized by** a content of oxygen defect centers, expressed by an extinction coefficient k248 at a wavelength of 248 nm with: 0.0035 < k248 < 0.1 cm⁻¹, a chlorine content [CI] in the range of 800 to 2500 wt. ppm, a hydroxyl group content of less than 0.5 wt. ppm and by a ratio [CI] / k248, where: 100,000 < [CI] / k248 < 550,000.

## Revendications

1. Procédé de fabrication de verre de quartz synthétique, comprenant les étapes de procédé :
a) transformation, à l'aide d'oxygène dans une zone de réaction, d'une charge d'alimentation contenant un composé de silicium carboneuse en particules de SiO₂,
b) dépôt des particules de SiO₂ sur une surface de dépôt avec formation d'un corps de suie SiO₂ poreux contenant du carbone et des groupes hydroxyles,
c) séchage du corps de suie SiO₂ poreux par échauffement du corps de suie poreux dans une atmosphère halogénée, et
d) vitrification en verre de quartz synthétique par échauffement du corps de suie à une température de vitrification,
**caractérisé en ce qu'**un corps de suie ayant une teneur en carbone située dans la plage de 1 ppm en poids à 50 ppm en poids est généré.

2. Procédé selon la revendication 1, **caractérisé en ce que** la teneur en carbone est générée du fait que lors de la transformation de la charge d'alimentation selon l'étape de procédé (a), une proportion surstoechiométrique du composé de silicium carboneuse est mise à disposition dans la zone de réaction.

3. Procédé selon la revendication 1 ou 2, **caractérisé en ce que** la teneur en carbone est générée du fait que la durée de séjour du composé de silicium carboneuse dans la zone de réaction est réglée de manière plus courte que pour la transformation totale de la charge d'alimentation.

4. Procédé selon la revendication 3, **caractérisé en ce que** la durée de séjour est générée par réglage d'une zone de réaction trop courte et/ou par génération d'une vitesse d'écoulement trop élevée de la charge d'alimentation dans la zone de réaction.

5. Procédé selon l'une quelconque des revendications précédentes, **caractérisé en ce qu'**un corps de suie ayant une densité relative moyenne - par rapport à la densité du verre de quartz (2,21 g/cm³) - est générée dans la plage comprise entre 20% et 35%.

6. Procédé selon l'une quelconque des revendications précédentes, **caractérisé en ce qu'**une teneur en groupes hydroxyles de moins de 1 ppm en poids en réglée dans le verre de quartz synthétique.

7. Procédé selon l'une quelconque des revendications précédentes, **caractérisé en ce que** le processus de séchage est mené de manière à ce qu'une teneur en chlore située dans la plage de 800 à 2500 ppm en poids se règle dans le verre de quartz synthétique après la vitrification.

8. Procédé selon l'une quelconque des revendications précédentes, **caractérisé en ce qu'**un corps de suie ayant une teneur en carbone située dans la plage de 2 ppm en poids à 25 ppm en poids est généré.

9. Procédé selon l'une quelconque des revendications précédentes, **caractérisé en ce que** de l'OMCTS est utilisé comme charge d'alimentation.

10. Verre de quartz synthétique en tant que matière d'enveloppe d'une fibre optique, **caractérisé par** une teneur en centres déficients en oxygène, exprimée par un coefficient d"extinction k248 à une longueur d'ondes de 248 nm, par : 0,0035 < k248 < 0,1 cm⁻¹, une teneur en chlore [CI] située dans la plage de 800 à 2500 ppm en poids, une teneur en groupes hydroxyles de moins de 0,5 ppm en poids et par un rapport [CI] / k248 équivalent à : 100.000 < [CI] / k248 < 550.000.
